Europäisches Patentamt

European Patent Office

Office européen des brevets

(11) Publication number: **0 218 769**
A2

# (12) EUROPEAN PATENT APPLICATION

(21) Application number: 85309467.0

(22) Date of filing: 23.12.85

(51) Int. Cl.⁴: **A23B 4/02** , A23B 4/04 , A23B 4/06

(30) Priority: 10.10.85 ES 547780

(43) Date of publication of application:
22.04.87 Bulletin 87/17

(84) Designated Contracting States:
DE FR GB IT LU NL SE

(71) Applicant: DISAMO, S.A.
Calle de las Industrias, s/no.
Torrejon de Ardoz (Madrid)(ES)

(72) Inventor: Mairal, Fernando Abella
Teruel, 9
Hueseca(ES)

(74) Representative: Pearce, Anthony Richmond et al
MARKS & CLERK Alpha Tower Suffolk Street
Queensway Birmingham B1 1TT(GB)

(54) Process for elaborating and preserving a meat product.

(57) A meat product, e.g a boned or deboned ham, is salted in a rotary device at -1 to +7°C under reduced pressure for 48 to 72 hours in the presence of lipolytic bacteria whilst continually rotating the device at no more than 10 rpm. The salted product is then cooled for 7 to 12 days or more and subsequently dried for 30 to 48 days in a drying chamber at an appropriate temperature and humidity.

EP 0 218 769 A2

## PROCESS FOR ELABORATING AND PRESERVING A MEAT PRODUCT

The present invention refers to a process for elaborating and preserving a meat product, and more specifically for preparing, curing and preserving certain pieces of meat known as "pork hams", wherefore the "meat product" will hereinafter be referred to as "ham or hams".

Although the process of the invention can be used to cure boned or boneless hams, it is true that the said process will preferably be utilised to elaborate, cure and preserve boneless hams, so that in either case the said process will constitute a considerable improvement of the known conventional methods for preparing and curing hams.

The processes considered as the most classic and conventional for preparing hams to be cured and then consumed, include a series of successive operations. The first operation consists in manually salting the hams, to then introduce such salted hams in a cooling chamber. In the next step, the hams are washed to remove the salt remains therefrom, whereafter they are subjected to a drying operation in appropriate chambers at low temperatures until the hams are cured. Finally, the said hams are deboned to be vacuum-packaged in plastic casings, this latter packaging operation being optional since the hams can be cured with bones, in which case the vacuum-packaging of the said hams is not necessary.

As contrasted with these known conventional processes, there is a more recent and considerably more advantageous process, which is preferably used to cure deboned hams, the steps of this process being initiated with the deboning of the fresh ham, without tearing the tissue or aponeurosis surrounding the muscles, so that said muscles may conserve their cohesion, wherefore the product obtained lacks the hole or hollow produced when the said hams are deboned after curing.

undoubtedly, the deboning of the fresh hams permits a better utilisation of the offals attached to the bone, since the said offals can be used as raw material in the manufacture of other meat products.

According to the said process, once the fresh hams have been deboned, the skin is removed to salt the said hams. Said salting comprises the addition of a mixture of additives based on sodium chloride, sugar, potassium nitrate, sodium nitrite, ascorbic acid or their salts and enzymes, in such a manner that this mixture of additives will be duly balanced so that the content thereof in the hams will be the least necessary.

The said salting step can be carried out, in accordance with known methods, by means of two different procedures. One procedure consists in carrying out salting manually, by placing the ham on a table or on an appropriate site and spreading thereon a considerable amount of the additive mixture, an operator using his hands so that the said additive mixture may penetrate into the fleshy mass constituting the ham.

The other salting procedure consists in introducing the hams in a conventional drum into which the additive mixture has been added, so that the mixture penetrates into all the hams.

· These two salting procedures present serious drawbacks, since in the first place a high amount of the said additives is wasted, inasmuch as a greater amount of additives than that which finally penetrates into the fleshy mass of the ham is necessary. By way of example, it can be stated that an additional amount of at least 30% of the additives is necessary so that a determined amount of additive can penetrate into the fleshy mass of the ham, whereby, logically, 30% of the additives will be lost and/or wasted when salting takes place manually of in conventional drums.

Further, when salting takes place manually, the additives do not penetrate homogeneously, varying from one ham to another and even varying from one part of the ham to another. Neither does the additive mixture penetrate homogeneously when salting takes place in conventional drums.

Besides, when the hams are salted manually or by means of conventional drums, the preserving effect of the various hams, until they are cured, is due merely to the salting thereof. However, the salt on its own and in small amounts does not play a good preserving role against decay-producing bacteria, always permitting the growth of the acidolactic bacteria which causes the hams to acquire an acidy flavour, thus the growth of such bacteria can only be restrained with very low temperatures until the "water activity" is sufficiently low.

According to the described known processes, upon completion of salting of the hams, they are packaged by placing them in containers having a peculiar configuration, so that they may acquire the final shape of the product. The said containers are placed in a cooling chamber for a period of from 15 to 30 days, whereafter they are placed in a drying chamber at a temperature in the range of from 20 to 40°C and a relative humidity of from 55 to 78%. The permanence time in this latter chamber is of from 40 to 60 days.

In short, the known processes for curing hams present, inter alia, the following problems and inconveniences:

1. Large quantities of the additive mixture, necessary to salt the hams, are lost.

2. Substantial losses in the time to carry out all the steps of the process, since minimum periods of time are necessary for both the salting step as well as that of cooling and drying, wherefore the time which elapses from the initiation of the process until the hams are ready for consumption, is considerably long.

3. A productivity which is far from being the most profitable, due to the said time losses.

4. An end product which is not in the least the most ideal for consumption is obtained since, as indicated, the additive mixture does not penetrate uniformly into the fleshy mass of the hams, independently of the growth of acidolactic bacteria causing the ham to acquire an acidy flavour, wherefore the end product does not have the necessary quality to satisfy the con sumer.

Thus, taking the aforegoing into consideration, the invention proportions a novel process for elaborating, curing and preserving hams, which process is based on two main principles:

a) Utilization of highly lipolytic bacteria to obtain an end product under optimum consumption conditions and having a quality which cannot easily be excelled.

b) Mechanization of the salting step, utilising a rotary device, the function and end purpose of which is not related to the function carried out by the conventional drums.

The use of highly lipolytic bacteria precisely permits the mechanization of the salting step, so that this mechanization, as indicated, is carried out in a rotary device preferably comprised of a drum formed of a cylinder in which a longitudinally warped sheet is placed.

Said rotary device will be subjected to an inner vacuum pressure and it will be turned at a low number of revolutions, which will in no case be of more than 10 revolutions per minute. In this manner, when the hams are introduced in the said rotary device and the device is subjected to this vacuum pressure, they will be massaged and rubbed, the additive mixture effectively penetrating into the fleshy mass of the hams as a result of the massage and the expansion on the flesh due to the vacuum. Likewise, by means of this mechanized salting process, the added amount of additive is exactly that absorbed by the ham, and exactly the same amount of additive penetrates into all the hams.

This means that the amount of additive is highly reduced, having a positive influence on the consumer's health, the salting process is shortened by 50% and the risks are diminished, since only when the salt and the nitrates have reached the centre of the ham in the due proportion, can it be guaranteed that the product will not perish.

That is to say, the massage or rubbing of the hams in said mechanized salting step causes the extraction of the soluble protein from within the cells to the intercellular space, attaining a significantly improved colour and texture under like conditions, independently of the shortening of the process, since the salting step is shortened by 50% and the drying step by 20%, resulting in a saving in energy and financing. Likewise, this mechanized salting step facilitates a more rapid lowering of the water activity, thereby diminishing risks and enhacing better flavours.

Further, the mechanization of the salting step by means of the said rotary devices, will take place in a period of time ranging from 48 to 72 hours, obtaining a much higher productivity, as well as a perfect spreading of the additives and penetration thereof into the fleshy mass. This permits the amount of the said additives in all the hams to be further reduced, thereby favourably influencing the consumer's health.

On the other hand, the lipolytic action of the enzyme complex of the bacteria added to the additive mixture, in the process of the invention, produces a flavour which is more perfect than that of the individual enzymes utilised in conventional processes, since the addition of such highly lipolytic bacteria permits the salt level to be reduced and more elevated temperatures to be used inasmuch as the said bacteria will prevent the growth of the contaminating flora always present in the meat and responsible for substantial as well as minor alterations in colour and flavour, thereby obtaining a healthier and purer product, that is a more perfect product.

That is to say, the addition of highly lipolytic bacteria considerably reduces the risk of decay or acidification, since some undesirable bacterial growth always occurs in the curing of ham which, even though it does not obviously damage the product, if eliminated, as in the case under discussion, will proportion a product having a purer flavour.

Further, such bacteria, since they are highly lipolytic, have an enzyme system capable of breaking down the fats into free fatty acids which produce the good flavour of the product or the ham, wherefore the addition of such bacteria permits the amount of flavouring products therein to be increased, thereby accelerating curing and improving the end product.

Finally, the temperature in the rotary device must preferably be of from -1 to 7°C, more preferably -1 to +5°C.

In this manner and in accordance with the two principles on which the process of this invention is based, an end product is obtained whose curing takes place in a minimum period of time, so far unsuspected, since apart from considerably reducing the salting time, the permanence times of the hams in the corresponding cooling chamber and in the drying chamber are also reduced, wherefore the permanence time of the hams, once salted, in the cooling chamber ranges from 7 to 12 days, and the permanence time in the drying chamber ranges from 30 to 48 days which, as can be observed, are much shorter times than those necessary in conventional processes.

There is no doubt therefore that the process of the present invention not only proportions the said advantages, that is, shortening to a minimum the curing time of the ham with the consequent saving in production, but an end product is also obtained whose quality and presentation are better than those achieved by known processes, favourably influencing the consumer's health, independently of the economic saving which the reduction in the amount of additives, as already indicated, implies.

## Claims

1. Process for elaborating and preserving a meat product preferably applicable in the curing of fresh boned or boneless ham, which comprises a series of steps consisting of:

-salting the fresh ham with a mixture of additives: sodium chloride, sugar, potassium nitrate, sodium nitrite, ascorbic acid or their salts;

-introducing the said ham , optionally after adapting them to acquire a definite configuration, in a cooling chamber to balance the salting mixture; and

-introducing the said ham in a drying chamber at an appropriate temperature and humidity;

characterised in that the salting step is carried out in a rotary device subjected to a temperature in the range of from -1 to +7°C pressure for a period of time in the range of from 48 to 72 hours, in which the salting mixture penetrates into the fleshy mass; and in that the said rotary device turns continually at a maximum speed of 10 r.p.m., the said process further comprises adding to the salting mixture bacteria having a high lipolytic activity.

2. Process for elaborating and preserving a meat product according to claim 1, characterised in that the time of the ham in the cooling chamber is of at least 12 days.